# EUROPEAN PATENT SPECIFICATION

(11) **EP 4 415 597 B1**
(45) Date of publication and mention of the grant of the patent: **05.08.2026**
(21) Application number: 22792874.4
(22) Date of filing: 07.10.2022
(51) Int. Cl.: A47L 9/00, A47L 9/28

(54) **ROBOTIC VACUUM CLEANER**
STAUBSAUGERROBORTER
ASPIRATEUR ROBOTISÉ

(30) Priority: 15.10.2021 GB 202114749
(43) Date of publication of application: 21.08.2024
(73) Proprietor: DYSON TECHNOLOGY LIMITED, Malmesbury Wiltshire SN16 0RP (GB)
(72) Inventor: GENN, Stuart, Malmesbury Wiltshire SN16 0RP (GB); MOHANA DAS, Vinod, Malmesbury Wiltshire SN16 0RP (GB); SAUPI, Sharir Azfar, Malmesbury Wiltshire SN16 0RP (GB); ALIAS, Nor, Malmesbury Wiltshire SN16 0RP (GB)
(74) Representative: Dyson IP Department
(86) International application number: PCT/GB2022/052547
(87) International publication number: WO 2023/062344

(56) References cited:
- EP-A1- 2 679 130
- WO-A1-2018/041190
- DE-A1- 102018 117 740
- US-A1- 2015 150 429

## Description

### Field of the Invention

The present invention relates to a robotic vacuum cleaner.

### Background of the Invention

Robotic vacuum cleaners may be used to autonomously vacuum a room, or series of rooms in a building. During use robotic vacuum cleaners may encounter obstacles which can be traversed to enable continued vacuuming to take place. US2015/0150429 describes a cleaning robot that can detect a stuck state using a motion instruction or sensor information and can escape from the stuck state using a wheel structure capable of changing a total height of the cleaning robot. In addition, a degree of risk and type of the stuck state is predicted before the cleaning robot is in the stuck state so that the cleaning robot may deal with the stuck state in advance. The cleaning robot may escape from the stuck state via rapid deceleration or quick stopping in accordance with the predicted degree of risk of the stuck state, and the cleaning robot may deal with the stuck state by using information to select an escaping method suitable for the type of the stuck state.

### Summary of the Invention

According to a first aspect of the present invention there is provided a robotic vacuum cleaner comprising a main body, a wheel for enabling movement of the main body, a drive motor for driving the wheel, a gearbox coupling the drive motor to the wheel, a distance sensor located on the main body, the distance sensor for sensing a distance between the main body and a surface positioned below the main body, and a suspension system coupling the wheel to the main body, wherein the suspension system comprises a first arm and a second arm, the first arm coupled to the gearbox at a first pivot point and coupled to the main body at a second pivot point, the second arm coupled to the gearbox at a third pivot point and coupled to the main body at a fourth pivot point, the first pivot point spaced from the third pivot point by a first distance, and the second pivot point spaced form the fourth pivot point by a second distance greater than the first distance.

Robotic vacuum cleaners may utilise distance sensors to sense a distance to a surface positioned below the robotic vacuum cleaner in use, and in particular may use such a distance sensor to determine when the robotic vacuum cleaner approaches and/or reaches an edge of one surface such that there is a step or drop to another surface. This may, for example, enable the robotic vacuum cleaner to determine when it encounters a step which is too large for the robotic vacuum cleaner to traverse, and hence enable the robotic vacuum cleaner to take appropriate action to avoid the step. Such action may include stopping the drive motor and/or putting the drive motor into reverse.

However, it has been found that inadvertent triggering of the distance sensor can be experienced by some robotic vacuum cleaners, for example those with a single arm suspension system, in use, where those robotic vacuum cleaners attempt to traverse obstacles that should be traversable. **In** particular, in such circumstances the robotic vacuum cleaner has been found to rear up relative to the obstacle, thereby increasing a distance between a front end of the robotic vacuum cleaner and the surface upon which the robotic vacuum cleaner is travelling and/or the obstacle that is being traversed. The rearing up of the robotic vacuum cleaner may be caused by a number of factors, including any of a back end of the robotic vacuum cleaner being supported on the surface upon which the robotic vacuum cleaner is travelling, and offset loading on the wheel as a result of contact with the obstacle causing greater frictional force at the pivots of the suspension system.

An increase in distance between the robotic vacuum cleaner and the surface upon which it is travelling in the manner described above may cause inadvertent triggering of the distance sensor, resulting in the robotic vacuum cleaner abandoning the attempt to traverse the obstacle. This may be undesirable, particularly where the obstacle is a relatively small step change boundary between rooms of a building, as it may result in reduced cleaning coverage for the robotic vacuum cleaner, and/or may result in increased human interaction with the robotic vacuum cleaner to obtain a desired cleaning coverage.

It has been found that by providing a robotic vacuum cleaner comprising a suspension system according to the first aspect of the present invention, rearing up of the main body of the robotic vacuum cleaner may be inhibited, which may result in a reduced risk of inadvertent triggering of the distance sensor, and hence may provide increased room coverage in use.

In particular, as the first pivot point is spaced from the third pivot point by a first distance, and the second pivot point is spaced form the fourth pivot point by a second distance greater than the first distance, offset loading of the wheel may result in an increased moment applied at the first and third pivots, thereby making it easier for the first and second arms to move in response to the wheel contacting an obstacle, and hence enable movement of the suspension system without the robotic vacuum cleaner rearing up.

The first distance may be measured between respective pivot axes defined by the first and third pivot points, and the second distance may be measured between respective pivot axes defined by the second and fourth pivot points.

The first and second arms may be directly coupled to the gearbox and directly coupled to the main body at respective ones of the first through fourth pivot points, or may be indirectly coupled to the gearbox and indirectly coupled to the main body at respective ones of the first through fourth pivot points. For example, the first and second arms may be indirectly coupled to the main body via a suspension housing of the suspension system, with the suspension housing coupled to the main body.

The robotic vacuum cleaner may be movable in a first direction substantially orthogonal to a rotational axis of the wheel, and in a second, opposite, direction substantially orthogonal to the rotational axis of the wheel. The first and third pivot points may be located rearwardly of the second and fourth pivot points when the robotic vacuum cleaner moves in the first direction, and the second and fourth pivot points may be located rearwardly of the first and third pivot points when the robotic vacuum cleaner moves in the second direction.

It has been found that such a configuration of the suspension system may be influenced by a reaction torque in response to the drive motor. For example, where the wheel is driven by the drive motor in a clockwise direction, the first and second arms may experience torque in an anti-clockwise direction at the first to fourth pivot points, and vice versa. As the robotic vacuum cleaner is driven in a forward direction, for example in the first direction in which the second and fourth pivot points precede the first and third pivot points, the reaction torque may result in reduced downforce on the wheel relative to an arrangement where the first and second distances are equal. As the robotic vacuum cleaner is driven in a rearward direction, for example in the second direction in which the first and third pivot points precede the second and fourth pivot points, the reaction torque may result in increased downforce on the wheel relative to an arrangement where the first and second distances are equal. In such a manner the second distance may be chosen such that downforce is substantially equal for both movement in the first, forward, direction and the second, rearward, direction.

The second and fourth pivot points may precede the wheel when the robotic vacuum cleaner is driven in the first direction. The wheel may precede the second and fourth pivot points when the robotic vacuum cleaner is driven in the second direction

The robotic vacuum cleaner may comprise a cleanerhead assembly at a first, front, end of the main body, and a separation system located at a second, rear, end of the main body. The second end of the main body may be substantially opposite to the first end of the main body. The robotic vacuum cleaner may comprise a battery located at the second end of the main body. The cleanerhead assembly may comprise a rotatable brushbar and a brushbar motor for driving the rotatable brushbar. The first end of main body may be substantially flat, and the second end of the main body may be substantially curved, for example such that the main body is substantially D-shaped in plan view. Movement of the robotic vacuum cleaner in the forward direction may be movement in a direction where the flat end of the main body precedes the curved end of the main body, and movement of the robotic vacuum cleaner in the rearward direction may be movement in a direction where the curved end of the main body precedes the flat end of the main body.

The distance sensor may be located at the first end of main body, for example adjacent to the cleanerhead assembly, and forward of the cleanerhead assembly in the first direction. The distance sensor may be configured to provide a control signal to a controller of the drive motor, for example to provide a control signal indicative that the drive motor should be stopped and/or put into a reverse direction in response to a distance measured by the distance sensor being over a threshold value. The threshold value may comprise a value of at least 90mm, 100mm, 110mm, or 120mm.

The suspension system may be configured to enable movement of the wheel relative to the main body, for example in a direction substantially orthogonal to a surface on which the robotic vacuum cleaner is placed in normal use.

The first and third pivot points may be offset from one another in a direction orthogonal to a rotational axis of the wheel and orthogonal to a surface on which the robotic vacuum cleaner is travelling in use. The second and fourth pivot points may be offset from one another in a direction orthogonal to a rotational axis of the wheel and orthogonal to a surface on which the robotic vacuum cleaner is travelling in use.

The second arm may overlie first arm, for example such that the second arm is located above the first arm when the wheel is located on a surface upon which the robotic vacuum cleaner travels in use.

A ratio of the second distance to the first distance may be in the region of 1.1 to 3.0, for example around 1.5. A ratio of the second distance to the first distance may be in the region of 1.3 to 2.0. A ratio of the second distance to the first distance may be in the region of 1.4 to 1.6, for example in the region of 1.4 to 1.5. Too large a ratio may result in a risk of the robotic vacuum cleaner tipping with the suspension effectively being too loose, whilst too small a ratio may still result in the robotic vacuum cleaner rearing up when attempting to traverse an obstacle in use. A ratio in the region of 1.1 to 3.0, and more particularly around 1.5, may provide a good compromise between these competing factors.

The first distance may be in the region of 10.0mm to 16.0mm, for example around 14.3mm. The second distance may be in the region of 17.0mm to 30mm, for example around 21.3mm. Such first and second distances may provide the aforementioned benefit of inhibiting rearing up of the robotic vacuum cleaner, whilst maintaining a relatively compact overall size of the suspension system. This may enable the main body of the robotic vacuum cleaner to be relatively compact with a relatively low height clearance, which may enable the robotic vacuum cleaner to fit under pieces of furniture, thereby providing greater cleaning coverage relative to a robotic vacuum cleaner having a main body of relatively increased height.

The wheel may comprise a diameter in the region of 75mm to 125mm, for example around 86mm. Such a wheel diameter may enable the main body of the robotic vacuum cleaner to be relatively compact with a relatively low height clearance, which may enable the robotic vacuum cleaner to fit under pieces of furniture, thereby providing greater cleaning coverage relative to a robotic vacuum cleaner having a main body of relatively increased height.

The second distance may be no more than 10% of the wheel diameter, no more than 20% of the wheel diameter, or no more than 40% of the wheel diameter. The first distance may be no more than 5% of the wheel diameter, no more than 15% of the wheel diameter, or no more than 25% of the wheel diameter.

The first arm may comprise a first end at which the first pivot point is located, and a second end opposite to the first end, wherein the second end is coupled to a spring at a coupling point, and the second pivot point is located intermediate the first and second ends. The first arm may comprise a non-linear shape such that an angle is defined between the coupling point and the second pivot point, for example between the coupling point and an axis passing through the second pivot point and parallel to a bottom surface of the main body, and the angle may be in the region of 90° to 120°, for example around 96°. Such an angle may assist with providing a relatively constant downforce when the robotic vacuum cleaner travels in both the first, front, and second, rearward, directions.

The spring may comprise a spring constant in the region of 0.75N/m to 1.25N/m, for example of around 0.96N/m. Such a spring force may assist with providing a relatively constant downforce when the robotic vacuum cleaner travels in both the first, front, and second, rearward, directions.

The wheel may comprise a hub, and the drive motor may be located within the hub. This may provide a relatively compact arrangement, which may reduce a size of the main body compared to, for example, a robotic vacuum cleaner where the drive motor is located external of the hub of the wheel. The hub may comprise a hollow interior within which the drive motor is located. The drive motor may be misaligned with an axis of rotation of the wheel, for example with a rotational axis of the drive motor misaligned with the axis of rotation of the wheel. The gearbox may be located within the hub.

The wheel may be located at a first side of the main body, and the robotic vacuum cleaner may comprise a further wheel located at a second side of the main body opposite to the first side of the main body, a further drive motor for driving the further wheel, a further gearbox coupling the further drive motor to the further wheel, and a further suspension system coupling the further wheel to the main body, wherein the further suspension system comprises a third arm and a fourth arm, the third arm coupled to the further gearbox at a fifth pivot point and coupled to the main body at a sixth pivot point, the fourth arm coupled to the further gearbox at a seventh pivot point and coupled to the main body at an eighth pivot point, the fifth pivot point spaced from the seventh pivot point by a third distance, and the sixth pivot point spaced from the eighth pivot point by a fourth distance greater than the third distance.

By providing first and second wheels at opposite sides of the main body, with the first and second wheels operable. for example individually operable, by two separate drive motors, greater control of motion of the robotic vacuum cleaner may be provided compared to, for example, a robotic vacuum cleaner where two wheels are operable by a single drive motor. By providing the further wheel with a suspension system where the sixth pivot point is spaced from the eighth pivot point by a fourth distance greater than the third distance, rearing up of the robotic vacuum cleaner may be inhibited, thereby inhibiting inadvertent triggering of the distance sensor as previously described.

The further suspension system may comprise substantially the same structure as the suspension system, for example with the first and third distances being substantially the same and the second and fourth distances being substantially the same.

The robotic vacuum cleaner may comprise a navigation system for determining a route of travel of the robotic vacuum cleaner, and a controller for controlling the drive motor in response to a signal from the navigation system.

According to a second aspect of the present invention there is provided a robotic vacuum cleaner comprising a main body, a wheel for enabling movement of the main body, a drive motor for driving the wheel, a gearbox coupling the drive motor to the wheel, and a suspension system coupling the wheel to the main body, wherein the suspension system comprises a first arm and a second arm, the first arm coupled to the gearbox at a first pivot point and coupled to the main body at a second pivot point, the second arm coupled to the gearbox at a third pivot point and coupled to the main body at a fourth pivot point, the first pivot point spaced from the third pivot point by a first distance, the second pivot point spaced form the fourth pivot point by a second distance greater than the first distance, and a ratio of the second distance to the first distance is in the region of 1.1 to 3.0.

It has been found that by providing a robotic vacuum cleaner comprising a suspension system according to the second aspect of the present invention, rearing up of the main body of the robotic vacuum cleaner may be inhibited.

Furthermore, it has been found that such a configuration of the suspension system may be influenced by a reaction torque in response to the drive motor. For example, where the wheel is driven by the drive motor in a clockwise direction, the first and second arms may experience torque in an anti-clockwise direction at the first to fourth pivot points, and vice versa. As the robotic vacuum cleaner is driven in a forward direction, for example in the first direction in which the second and fourth pivot points precede the first and third pivot points, the reaction torque may result in reduced downforce on the wheel relative to an arrangement where the first and second distances are equal. As the robotic vacuum cleaner is driven in a rearward direction, for example in the second direction in which the first and third pivot points precede the second and fourth pivot points, the reaction torque may result in increased downforce on the wheel relative to an arrangement where the first and second distances are equal. In such a manner the second distance, and hence the ratio of the second distance to the first distance, may be chosen such that downforce is substantially equal for both movement in the first, forward, direction and the second, rearward, direction.

The robotic vacuum cleaner may comprise a distance sensor for sensing a distance between the main body and a surface positioned below the main body.

Optional features of aspects of the present invention may be equally applied to other aspects of the invention, where appropriate.

### Brief Description of the Drawings

Figure 1 is a perspective view of a robotic vacuum cleaner;
Figure 2 is a schematic underside view of the robotic vacuum cleaner of Figure 1;
Figure 3 is a perspective view of a wheel assembly of the robotic vacuum cleaner of Figure 1;
Figure 4 is a first schematic view of a first suspension system of the robotic vacuum cleaner of Figure 1;
Figure 5 is a second schematic view of the first suspension system of the robotic vacuum cleaner of Figure 1;
Figure 6 is a schematic view of the first suspension system of Figures 4 and 5 when traversing an object;
Figure 7 is a first schematic view of a second suspension system of the robotic vacuum cleaner of Figure 1;
Figure 8 is a second schematic view of the second suspension system of the robotic vacuum cleaner of Figure 1;
Figure 9 is a plot of difference between downforce in forward and rearward directions versus wheel extension for a variety of suspension configurations; and
Figure 10 is a plot of downforce versus moment for a variety of suspension configurations.

### Detailed Description of the Invention

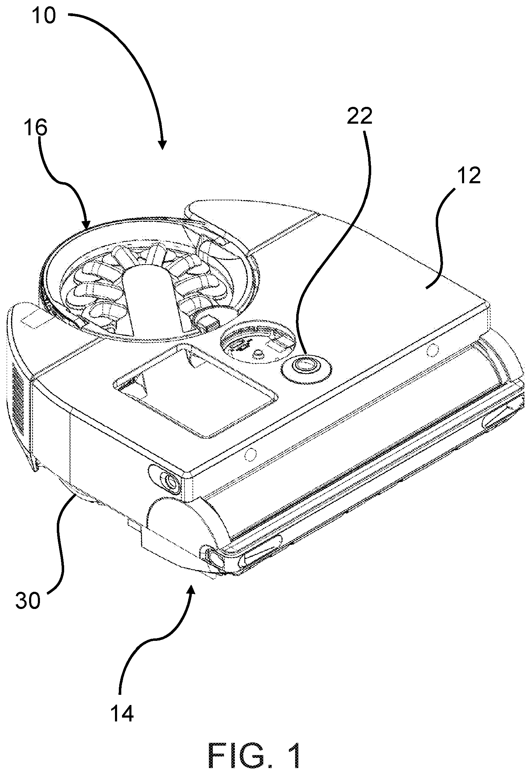

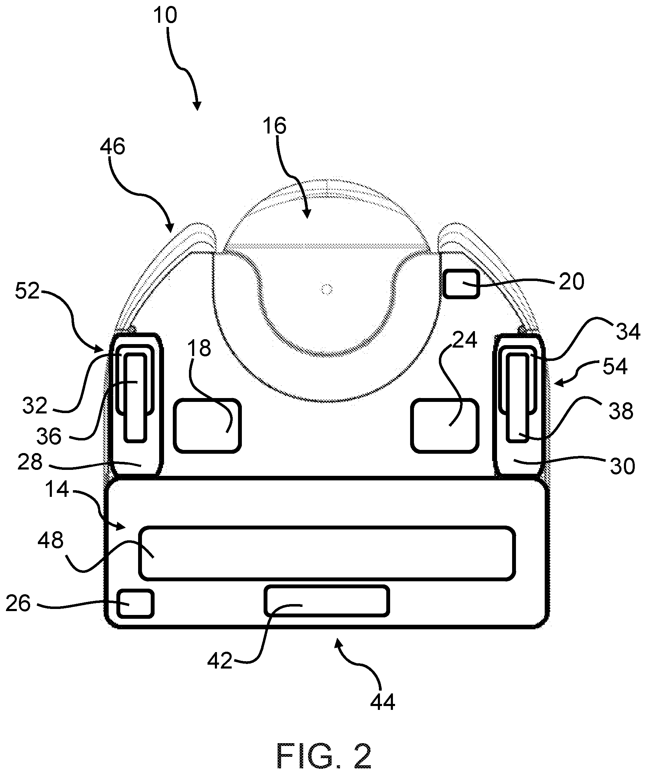

A robotic vacuum cleaner 10 is illustrated in Figures 1 and 2. The robotic vacuum cleaner 10 comprises a main body 12, a cleanerhead assembly 14, a separation system 16, a vacuum motor 18, a battery 20, a navigation system 22, a controller 24, a distance sensor 26, first 28 and second 30 wheels, first 32 and second 34 drive motors, first 36 and second 38 gearboxes, and first 40 and second 42 suspension systems.

The main body 12 is generally D-shaped in plan view having a flat front end 44 and a curved rear end 46. A forward direction of motion of the robotic vacuum cleaner 10 is taken to be motion where the flat front end 44 precedes the curved rear end 46, with a rearward direction of motion of the robotic vacuum cleaner 10 taken to be motion where the curved rear end 46 precedes the flat front end 44. The main body 12 is generally hollow and defines a housing for other of the aforementioned components of the robotic vacuum cleaner. It will be appreciated that other shapes of main body 12 are also envisaged.

The cleanerhead assembly 14 is located at the flat front end 44 of the main body 12, and comprises a brushbar 48 and a drive assembly (not shown) for driving the brushbar. The brushbar 48 is exposed through a suction slot in the main body 12, such that the brushbar 48 can engage with a surface on which the robotic vacuum cleaner 10 travels in use. The separation system 16 is located at the curved rear end 46 of the main body 12, and comprises a cyclonic separation system, although it will be appreciated that other forms of separation system are envisaged. The vacuum motor 18 comprises a motor driven impeller, and the vacuum motor 18 causes air to be drawn into the cleanerhead assembly 14 via the suction slot, and carried to the separation system 16 via ducting in the main body 12. Dirt entrained in the air is then separated by the separation system 16, and the cleansed air is exhausted from the robotic vacuum cleaner 10.

The battery 20 provides electrical power to the various electrical components of the vacuum cleaner, such as the vacuum motor 18, the navigation system 20, the controller 24, the distance sensor 26, and the first 32 and second 34 drive motors. The battery 20 comprises a number of individual batteries and by also be referred to as a so-called battery pack.

The navigation system 22 comprises an appropriate machine vision system for guiding the robotic vacuum cleaner around a room, or number of rooms, to be cleaned, and typically comprises a number of sensors for sensing a surrounding environment and locating the robotic vacuum cleaner 10 within the surrounding environment. The navigation system 22 determines a suitable cleaning path for the robotic vacuum cleaner, and provides signals utilised by the controller 24 to control the first 32 and second 34 drive motors to manoeuvre the robotic vacuum cleaner 10. The controller 24 comprises any appropriate controller, and although shown in Figure 2 as a single controller for simplicity, it will be appreciated that in practice the robotic vacuum cleaner 10 may comprise a number of controllers, each with a dedicated function. In Figure 2, the controller 24 also controls the vacuum motor 18. The controller 24 receives data from the distance sensor 26, which is used by the controller to control the first 32 and second 34 drive motors.

The distance sensor 26 is located at the flat front end 44 of the main body 12, slightly forward of the cleanerhead assembly 14, and in particular slightly forward of the brushbar 48, on an underside of the main body 12. The distance sensor 26 comprises a time-of-flight sensor used to determine a distance between the robotic vacuum cleaner 10, and in particular an underside of the main body 12 of the robotic vacuum cleaner 10, and a surface located below the robotic vacuum cleaner 10. Although illustrated as only a single distance sensor 26, in practice there may be a number of distance sensors spaced across the width of the front end 44 of the main body 12. In embodiments, a first distance sensor may be located at the first end of main body, adjacent to the cleanerhead assembly, and forward and to the right hand side of the cleanerhead assembly in the first direction and a second distance sensor may be located at the first end of main body, adjacent to the cleanerhead assembly, and forward and to the left hand side of the cleanerhead assembly in the first direction.

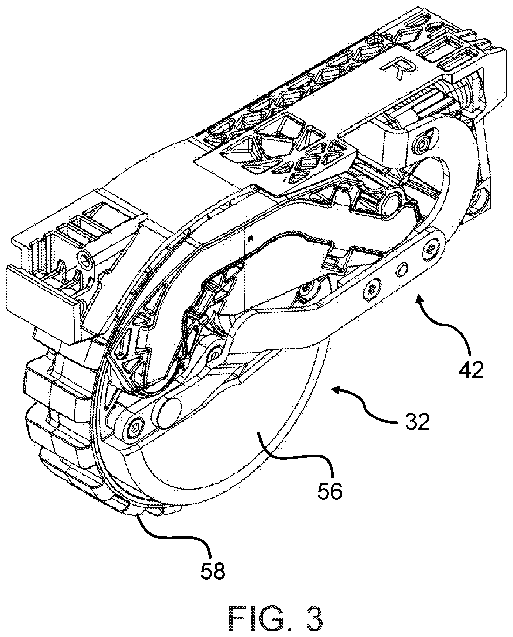

The first wheel 28 is located at a first, left, side 52 of the main body 12, and the second wheel 30 is located at a second, right, side 54 of the main body 12. As illustrated in Figure 3, each of the first 28 and second 32 wheels comprises a hub 56 and a tire 58 disposed about a periphery of the hub 56. The hubs 56 are substantially hollow in form, and each houses the drive motor 32,34 and gearbox 36,38 for the respective wheels 28,30. Each wheel has a diameter in the region of 75mm to 125mm, generally around 86mm, which may enable the robotic vacuum cleaner 10 to have a relatively low profile. The first 28 and second 30 wheels contact a surface upon which the robotic vacuum cleaner 10 is located in use, and are used to move the robotic vacuum cleaner 10 along that surface.

The first 32 and second 34 drive motors receive electrical power from the battery 20, receive control signals from the controller 24, and are used to drive the respective first 28 and second 30 wheels via the respective first 36 and second 38 gearboxes. Each drive motor 32,34 is separately controllable such that the first 28 and second 30 wheels can be independently driven. The first 32 and second 34 drive motors are offset from the rotational axes of the respective first 28 and second 30 wheels.

In use, the distance sensor 26 is used to detect steps or drops, and to ensure that appropriate action is taken to inhibit the robotic vacuum cleaner 10 from attempting to traverse a step or drop which could result in the robotic vacuum cleaner 10 tipping onto its side or back, and hence being unable to continue a cleaning route without user assistance. Such action includes any of stopping the first 32 and second 34 drive motors, or putting the first 32 and second 34 drive motors into reverse.

It has been found that when attempting to traverse certain obstacles, for example attempting to traverse an obstacle of a sufficiently low height such that a robotic vacuum cleaner should normally be able to traverse the obstacle, some robotic vacuum cleaners may inadvertently rear up, such that a front end of the robotic vacuum cleaner is lifted relative to the obstacle and/or the surface upon which the robotic vacuum cleaner is travelling. The rearing up of the robotic vacuum cleaner may be caused by a number of factors, including any of a back end of the robotic vacuum cleaner being supported on the surface upon which the robotic vacuum cleaner is travelling, and offset loading on the wheel as a result of contact with the obstacle causing greater frictional force at the pivots of the suspension system. This may particularly be the case for robotic vacuum cleaners having single arm suspension systems.

An increase in distance between the robotic vacuum cleaner and the surface upon which it is travelling in the manner described above may cause inadvertent triggering of the distance sensor, resulting in the robotic vacuum cleaner abandoning the attempt to traverse the obstacle. This may be undesirable, particularly where the obstacle is a relatively small step change boundary between rooms of a building, as it may result in reduced cleaning coverage for the robotic vacuum cleaner, and/or may result in increased human interaction with the robotic vacuum cleaner to obtain a desired cleaning coverage. The triggering of the distance sensor occurs when a distance measured between the distance sensor and the surface upon which it is travelling is over a threshold value. The threshold value is typically between 90mm and 120mm.

The first 40 and second 42 suspension systems of the robotic vacuum cleaner 10 aim to inhibit such inadvertent triggering of the distance sensor 26.

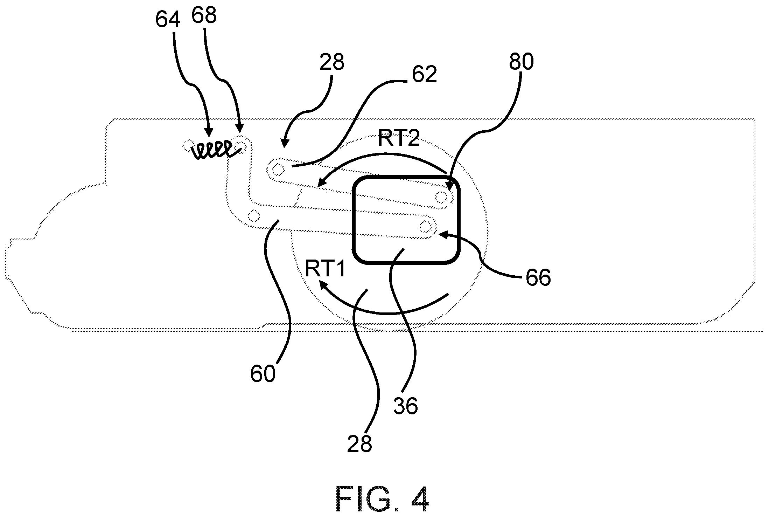

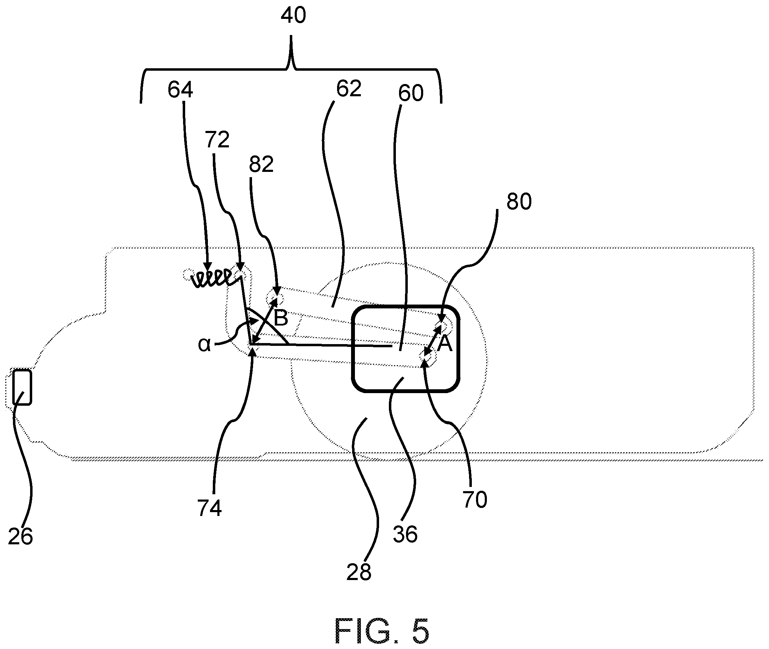

The first suspension system 40 is shown schematically in Figures 4 to 6, and comprises a first arm 60, a second arm 62, and a spring 64. The spring 64 has a spring constant in the region of 0.75N/m to 1.25N/m, and more particularly around 0.96N/m. It will be appreciated that in practice the first arm 60 and the second arm 62 may comprise multiple component parts, for example multiple component parts rigidly connected to one another.

The first arm 60 has a first end 66, a second end 68 and is non-linear between the first 66 and second 68 ends. The first arm 60 is coupled to the first gearbox 36 at a first pivot point 70 toward the first end 66 of the first arm 60, and is coupled to the spring 64 at a coupling point 72 toward the second end 86 of the first arm 60. An opposite end of the spring 64 is coupled to the main body 12. The first arm 60 is coupled to the main body 12 at a second pivot point 74 located intermediate the first pivot point 70 and the coupling point 72. The first arm 60 is shaped such that an angle α is defined between the second pivot point 74 and the coupling point 72. The angle α is in the region of 90° to 120°, and more particularly around 96°.

The second arm 62 generally overlies the first arm 60, and has a first end 76 and a second end 78. The second arm 62 is coupled to the first gearbox 36 at a third pivot point 80 toward the first end 76 of the second arm 62, and is coupled to the main body 12 at a fourth pivot point 82 toward the second end 78 of the second arm 62. Although illustrated in Figures 4 to 6 as linear, it will be appreciated that this is schematic only, and that the second arm 66 may be non-linear in practice, for example as illustrated in Figure 3.

The first 60 and second 62 arms enable the first wheel 28 to be raised and lowered relative to the main body 12.

As seen in Figures 4 to 6, the third pivot point 80 is located rearwardly of the first pivot point 70, and the fourth pivot point 82 is located rearwardly of the second pivot point 72. The first pivot point 72 is spaced from the third pivot point 80 by a first distance A, with the first distance A measured between respective pivot axes of the first 72 and third 80 pivot points. The first distance A is in the region of 10.0mm to 16.0mm, and more particularly around 14.3mm. The second pivot point 74 is spaced from the fourth pivot point 82 by a second distance B, with the second distance B measured between respective pivot axes of the second 74 and fourth 82 pivot points. The second distance B is in the region of 17.0mm to 30.0mm, and more particularly around 21.3mm.

The second distance B is greater than the first distance A, such that a spacing between the second 74 and fourth 82 pivot points, ie the rearward pivot points, is greater than a spacing between the first 72 and third 80 pivot points, ie the frontward pivot points. Here a ratio of the second distance B to the first distance A is in the region of 1.1 to 3.0, and more particularly around 1.5. In some examples a ratio of 1.43 is utilised. Furthermore, the second distance B is no more than 40% of the diameter of the first wheel 28.

Such a configuration of the first suspension system 40 may inhibit rearing up of the main body 12 of the robotic vacuum cleaner, which may result in a reduced risk of inadvertent triggering of the distance sensor 26, and hence may provide increased room coverage in use. In particular, the second distance B is greater than the first distance A, offset loading of the first wheel 28 when contacting an obstacle may result in an increased moment applied at the first 72 and third 80 pivot points, thereby making it easier for the first 60 and second 62 arms to move in response to the first wheel 28 contacting an obstacle, and hence enable movement of the first suspension system 40 without the robotic vacuum cleaner 10 rearing up.

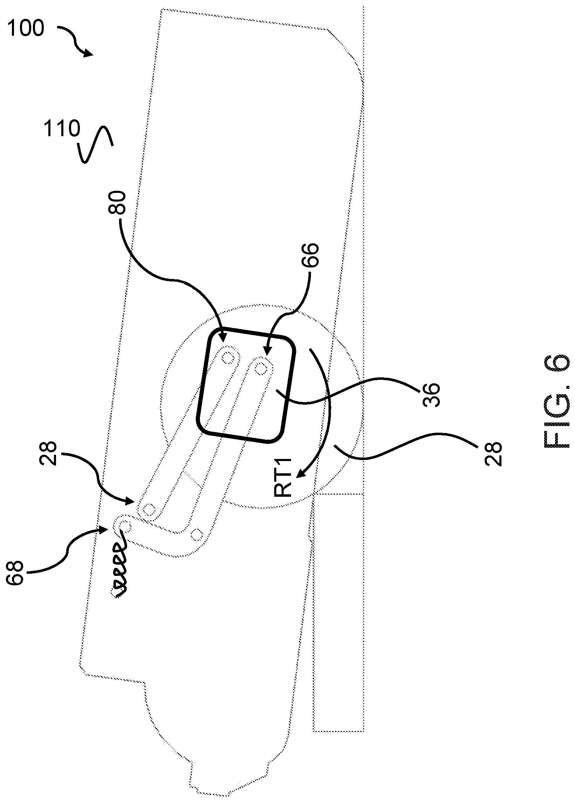

Furthermore, the first suspension system 40 may be influenced by a reaction torque in response to the first drive motor 32. For example, where the first wheel 28 is driven by the first drive motor 32 in an anti-clockwise direction as viewed in Figure 4, which may be considered a forward direction, the first 60 and second 62 arms may experience torque in a clockwise direction at the pivot points 72,72,80,82, and vice versa. As the robotic vacuum cleaner 10 is driven in a forward direction, the reaction torque may result in reduced downforce on the wheel relative to an arrangement where the first A and second B distances are equal, as the first 60 and second 62 arms are biased upwards, with this reaction torque indicated by arrow RT1 in Figures 4 and 6. As the robotic vacuum cleaner 10 is driven in a rearward direction, the reaction torque may result in increased downforce on the wheel relative to an arrangement where the first and second distances are equal, as the first 60 and second 62 arms are biased downwards, with this reaction torque indicated by arrow RT2 in Figure 4. In such a manner the second distance B may be chosen such that downforce is substantially equal for both movement in the first, forward, direction and the second, rearward, direction.

Appropriate selection of the spring constant of the spring 64 and the angle α may also aid in providing a relatively equal downforce in both the forward and rearward direction, with the values for the spring constant and the angle α previously discussed having been found to be beneficial in the first suspension system 40.

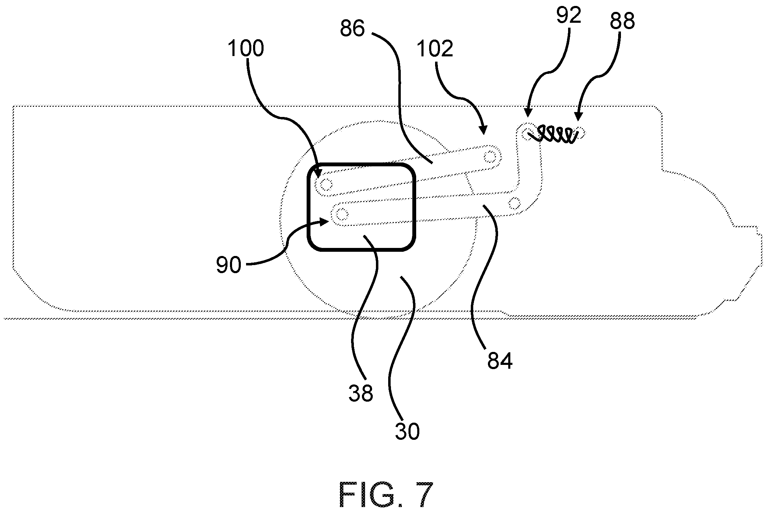

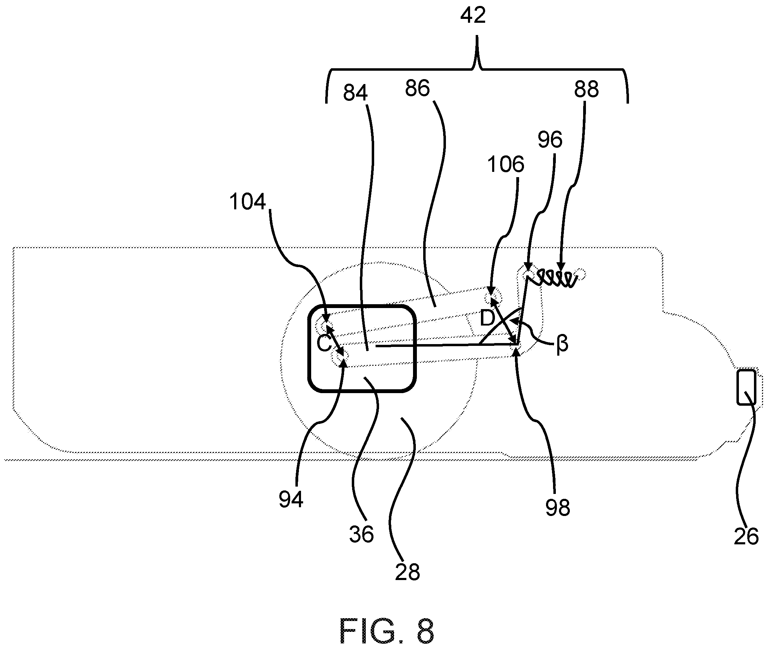

The second suspension system 42 has substantially the same form as the first suspension system 40, as can be seen in Figures 7 and 8, with the second suspension system 42 comprising third 84 and fourth 86 arms, and a second spring 88. The third arm 84 has a first end 90, a second end 92 and is non-linear between the first 90 and second 92 ends.

The third arm 84 is coupled to the second gearbox 38 at a fifth pivot point 94 toward the first end 90 of the third arm 84, and is coupled to the second spring 88 at a second coupling point 96 toward the second end 92 of the third arm 84. An opposite end of the second spring 88 is coupled to the main body 12. The third arm 84 is coupled to the main body 12 at a sixth pivot point 98 located intermediate the fifth pivot point 94 and the second coupling point 96. The third arm 84 is shaped such that an angle β is defined between the sixth pivot point 98 and the second coupling point 96. The angle β is in the region of 90° to 120°, and more particularly around 96°.

The fourth arm 86 generally overlies the third arm 84, and has a first end 100 and a second end 102. The fourth arm 86 is coupled to the second gearbox 38 at a seventh pivot point 104 toward the first end 100 of the fourth arm 86, and is coupled to the main body 12 at an eighth pivot point 106 toward the second end 102 of the fourth arm 86. Although illustrated in Figures 7 and 8 as linear, it will be appreciated that this is schematic only, and that the fourth arm 86 may be non-linear in practice, for example similar to that shown in Figure 3.

The third 84 and fourth 86 arms enable the second wheel 30 to be raised and lowered relative to the main body 12.

As seen in Figures 7 and 8, the seventh pivot point 104 is located rearwardly of the fifth pivot point 94, and the eighth pivot point 106 is located rearwardly of the sixth pivot point 98. The fifth pivot point 94 is spaced from the seventh pivot point 104 by a third distance C, with the third distance C measured between respective pivot axes of the fifth 94 and seventh 104 pivot points. The third distance C is in the region of 10.0mm to 16.0mm, and more particularly around 14.3mm. The sixth pivot point 98 is spaced from the eighth pivot point 106 by a fourth distance D, with the fourth distance D measured between respective pivot axes of the sixth 98 and eighth 106 pivot points. The fourth distance D is in the region of 17.0mm to 30.0mm, and more particularly around 21.3mm.

The fourth distance D is greater than the third distance C, such that a spacing between the sixth 98 and eighth 106 pivot points, ie the rearward pivot points, is greater than a spacing between the fifth 94 and seventh 104 pivot points, ie the frontward pivot points. Here a ratio of the fourth distance to the third distance is in the region of 1.1 to 3.0, and more particularly around 1.5. In some examples a ratio of 1.43 is utilised.

The first A and third C distances are substantially equal, and the second B and fourth D distances are substantially equal, thereby providing similar suspension characteristics between the left side 52 and the right side 54 of the main body 12 of the robotic vacuum cleaner 10.

In such a manner, the second suspension system 42 may provide similar benefits to the first suspension system 40, with rearing up of the robotic vacuum cleaner 10 as it traverses an obstacle inhibited, and inadvertent triggering of the distance sensor 26 also inhibited.

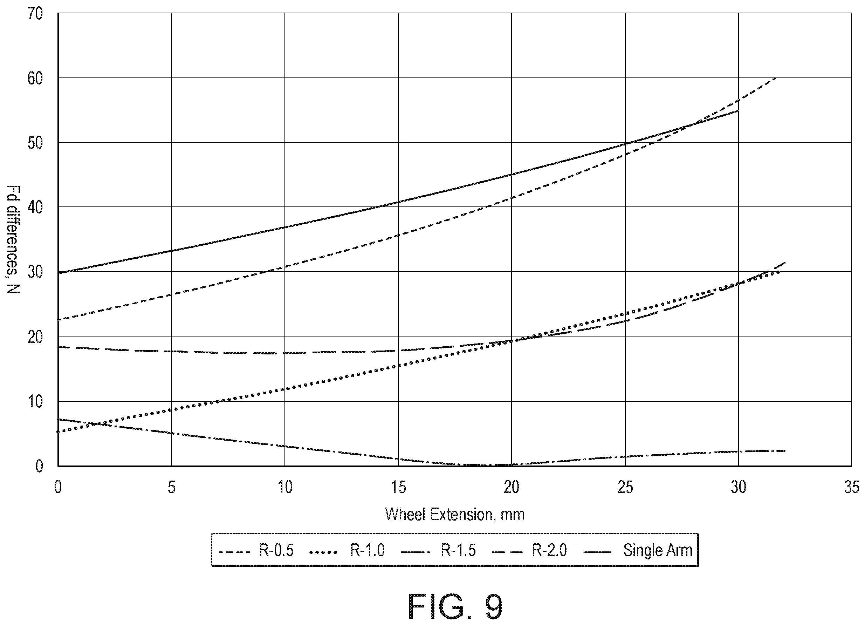

Figure 9 is a plot which illustrates the difference in downforce between forward and rearward drive directions versus wheel extension for a variety of suspension system configurations. As can be seen, a ratio of the second distance B to the first distance A, and hence also a ratio of the fourth distance D to the third distance C, in the region of 1.5 gives a relatively consistent downforce between forward and rearward drive directions, particularly at a wheel extension of around 17mm to 20mm.

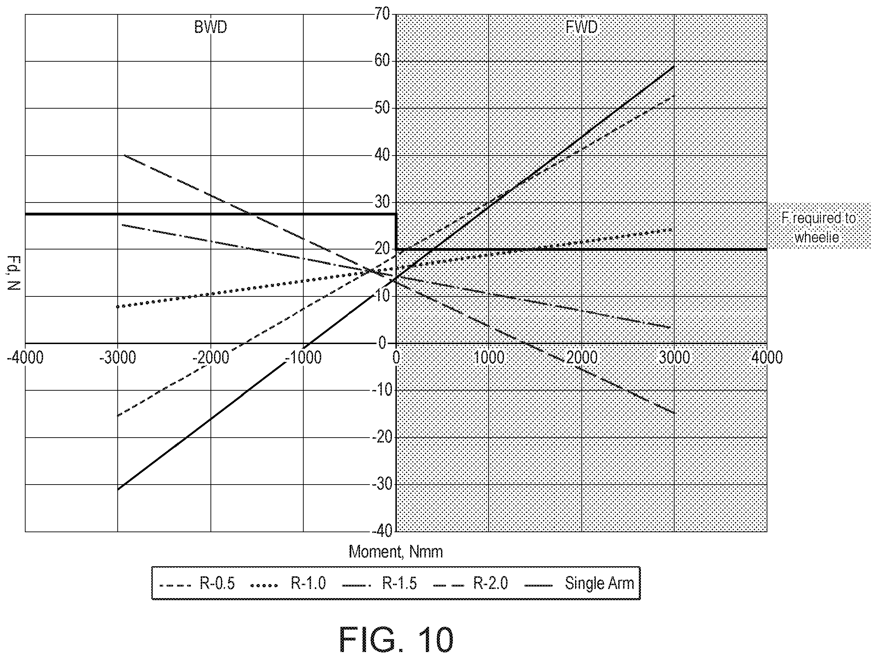

Figure 10 is a plot which illustrates downforce versus moment for a variety of suspension system configurations. As can be seen, a ratio of the second distance B to the first distance A, and hence also a ratio of the fourth distance D to the third distance C, in the region of 1.5 gives a downforce and moment below that required for the robotic vacuum cleaner 10 to rear-up, ie wheelie, in use.

## Claims

1. A robotic vacuum cleaner (10) comprising:
a main body (12);
a wheel (28, 30) for enabling movement of the main body;
a drive motor (32, 34) for driving the wheel,
a gearbox (36, 38) coupling the drive motor to the wheel;
a distance sensor (26) located on the main body, the distance sensor for sensing a distance between the main body and a surface upon which the wheel is located; and
a suspension system (40, 42) coupling the wheel to the main body;
wherein the suspension system comprises a first arm (60) and a second arm (62), the first arm coupled to the gearbox at a first pivot point (70) and coupled to the main body at a second pivot point (74), the second arm coupled to the gearbox at a third pivot point (80) and coupled to the main body at a fourth pivot point (82), the first pivot point spaced from the third pivot point by a first distance (A), and the second pivot point spaced form the fourth pivot point by a second distance (B) greater than the first distance.

2. A robotic vacuum cleaner as claimed in Claim 1, wherein the robotic vacuum cleaner (10) is movable in a first direction substantially orthogonal to a rotational axis of the wheel (28, 30), and in a second, opposite, direction substantially orthogonal to the rotational axis of the wheel, the first and third pivot points (70, 80) are located rearwardly of the second and fourth pivot points (74, 82) when the robotic vacuum cleaner moves in the first direction, and the second and fourth pivot points are located rearwardly of the first and third pivot points when the robotic vacuum cleaner moves in the second direction.

3. A robotic vacuum cleaner as claimed in Claim 1 or Claim 2, wherein a ratio of the second distance (B) to the first distance (A) is in the region of 1.1 to 3.0.

4. A robotic vacuum cleaner as claimed in any preceding claim, wherein a ratio of the second distance (B) to the first distance (A) is around 1.5.

5. A robotic vacuum cleaner as claimed in any preceding claim, wherein the first distance (A) is in the region of 10.0mm to 16.0mm.

6. A robotic vacuum cleaner as claimed in any preceding claim, wherein the first distance (A) is around 14.3mm.

7. A robotic vacuum cleaner as claimed in any preceding claim, wherein the second distance (B) is in the region of 17.0mm to 30.0mm.

8. A robotic vacuum cleaner as claimed in any preceding claim, wherein the second distance (B) is around 21.3mm.

9. A robotic vacuum cleaner as claimed in any preceding claim, wherein the first arm (60) comprises a first end (66) at which the first pivot point (70) is located, and a second end (68) opposite to the first end, wherein the second end is coupled to a spring (64) at a coupling point (72), and the second pivot point (74) is located intermediate the first and second ends.

10. A robotic vacuum cleaner as claimed in Claim 9, wherein the first arm (60) comprises a non-linear shape such that an angle is defined between the coupling point (72) and the second pivot point (74), and the angle is in the region of 90° to 120°, preferably wherein the angle is around 96°.

11. A robotic vacuum cleaner as claimed in Claim 9 or 10, wherein the spring (64) comprises a spring constant in the region of 0.75N/m to 1.25N/m.

12. A robotic vacuum cleaner as claimed in any of Claims 9 to 11, wherein the spring (64) comprises a spring constant of around 0.96N/m.

13. A robotic vacuum cleaner as claimed in any preceding claim, wherein the wheel (28, 30) comprises a hub (56), and the drive motor (32, 34) is located within the hub, preferably wherein the drive motor is misaligned with an axis of rotation of the wheel.

14. A robotic vacuum cleaner as claimed in Claim 13, wherein the gearbox (36, 38) is located within the hub (56).

15. A robotic vacuum cleaner (10) as claimed in any preceding claim, wherein the wheel (28, 30) is located at a first side of the main body, and the robotic vacuum cleaner comprises:
a further wheel (30, 28) located at a second side of the main body (12) opposite to the first side of the main body;
a further drive motor (34, 32) for driving the further wheel;
a further gearbox (38, 36) coupling the further drive motor to the further wheel; and
a further suspension system (42, 40) coupling the further wheel to the main body;
wherein the further suspension system comprises a third arm (84) and a fourth arm (86), the third arm coupled to the further gearbox at a fifth pivot point (94) and coupled to the main body at a sixth pivot point (98), the fourth arm coupled to the further gearbox at a seventh pivot point (104) and coupled to the main body at an eighth pivot point (106), the fifth pivot point spaced from the seventh pivot point by a third distance (C), and the sixth pivot point spaced from the eighth pivot point by a fourth distance (D) greater than the third distance.

## Patentansprüche

1. Staubsaugerroboter (10), umfassend:
einen Hauptkörper (12),
ein Rad (28, 30), damit sich der Hauptkörper bewegen kann,
einen Antriebsmotor (32, 34) zum Antreiben des Rads,
ein Getriebe (36, 38), das den Antriebsmotor an das Rad koppelt,
einen an dem Hauptkörper angeordneten Abstandssensor (26), wobei der Abstandssensor zum Erfassen eines Abstands zwischen dem Hauptkörper und einer Fläche, auf der sich das Rad befindet, dient, und
ein Aufhängungssystem (40, 42), das das Rad an den Hauptkörper koppelt,
wobei das Aufhängungssystem einen ersten Arm (60) und einen zweiten Arm (62) umfasst, wobei der erste Arm an einem ersten Drehpunkt (70) an das Getriebe gekoppelt ist und an einem zweiten Drehpunkt (74) an den Hauptkörper gekoppelt ist, wobei der zweite Arm an einem dritten Drehpunkt (80) an das Getriebe gekoppelt ist und an einem vierten Drehpunkt (82) an den Hauptkörper gekoppelt ist, wobei der erste Drehpunkt um einen ersten Abstand (A) von dem dritten Drehpunkt beabstandet ist und der zweite Drehpunkt um einen zweiten Abstand (B), der größer als der erste Abstand ist, von dem vierten Drehpunkt beabstandet ist.

2. Staubsaugerroboter nach Anspruch 1, wobei der Staubsaugerroboter (10) in eine erste Richtung, die im Wesentlichen orthogonal zu einer Drehachse des Rads (28, 30) verläuft, und in eine zweite, entgegengesetzte Richtung, die im Wesentlichen orthogonal zu der Drehachse des Rads verläuft, beweglich ist, wobei der erste und der dritte Drehpunkt (70, 80) hinter dem zweiten und dem vierten Drehpunkt (74, 82) angeordnet sind, wenn sich der Staubsaugerroboter in die erste Richtung bewegt, und der zweite und der vierte Drehpunkt hinter dem ersten und dem dritten Drehpunkt angeordnet sind, wenn sich der Staubsaugerroboter in die zweite Richtung bewegt.

3. Staubsaugerroboter nach Anspruch 1 oder Anspruch 2, wobei ein Verhältnis des zweiten Abstands (B) zu dem ersten Abstand (A) im Bereich von 1,1 bis 3,0 liegt.

4. Staubsaugerroboter nach einem der vorhergehenden Ansprüche, wobei ein Verhältnis des zweiten Abstands (B) zu dem ersten Abstand (A) etwa 1,5 beträgt.

5. Staubsaugerroboter nach einem der vorhergehenden Ansprüche, wobei der erste Abstand (A) im Bereich von 10,0 mm bis 16,0 mm liegt.

6. Staubsaugerroboter nach einem der vorhergehenden Ansprüche, wobei der erste Abstand (A) etwa 14,3 mm beträgt.

7. Staubsaugerroboter nach einem der vorhergehenden Ansprüche, wobei der zweite Abstand (B) im Bereich von 17,0 mm bis 30,0 mm liegt.

8. Staubsaugerroboter nach einem der vorhergehenden Ansprüche, wobei der zweite Abstand (B) etwa 21,3 mm beträgt.

9. Staubsaugerroboter nach einem der vorhergehenden Ansprüche, wobei der erste Arm (60) ein erstes Ende (66), an dem sich der erste Drehpunkt (70) befindet, und ein dem ersten Ende gegenüberliegendes zweites Ende (68) umfasst, wobei das zweite Ende an einem Kopplungspunkt (72) an eine Feder (64) gekoppelt ist und sich der zweite Drehpunkt (74) zwischen dem ersten und dem zweiten Ende befindet.

10. Staubsaugerroboter nach Anspruch 9, wobei der erste Arm (60) eine nicht lineare Form umfasst, so dass zwischen dem Kopplungspunkt (72) und dem zweiten Drehpunkt (74) ein Winkel definiert ist und der Winkel in dem Bereich von 90° bis 120° liegt, vorzugsweise wobei der Winkel etwa 96° beträgt.

11. Staubsaugerroboter nach Anspruch 9 oder 10, wobei die Feder (64) eine Federkonstante im Bereich von 0,75 N/m bis 1,25 N/m umfasst.

12. Staubsaugerroboter nach einem der Ansprüche 9 bis 11, wobei die Feder (64) eine Federkonstante von etwa 0,96N/m umfasst.

13. Staubsaugerroboter nach einem der vorhergehenden Ansprüche, wobei das Rad (28, 30) eine Nabe (56) umfasst und der Antriebsmotor (32, 34) in der Nabe angeordnet ist, vorzugsweise wobei der Antriebsmotor gegenüber einer Drehachse des Rads versetzt angeordnet ist.

14. Staubsaugerroboter nach Anspruch 13, wobei das Getriebe (36, 38) in der Nabe (56) angeordnet ist.

15. Staubsaugerroboter (10) nach einem der vorhergehenden Ansprüche, wobei sich das Rad (28, 30) an einer ersten Seite des Hauptkörpers befindet und der Staubsaugerroboter Folgendes umfasst:
ein weiteres Rad (30, 28), das sich an einer der ersten Seite des Hauptkörpers (12) gegenüberliegenden zweiten Seite des Hauptkörpers befindet,
einen weiteren Antriebsmotor (34, 32) zum Antreiben des weiteren Rads,
ein weiteres Getriebe (38, 36), das den weiteren Antriebsmotor an das weitere Rad koppelt, und
ein weiteres Aufhängungssystem (42, 40), das das weitere Rad an den Hauptkörper koppelt,
wobei das weitere Aufhängungssystem einen dritten Arm (84) und einen vierten Arm (86) umfasst, wobei der dritte Arm an einem fünften Drehpunkt (94) an das weitere Getriebe gekoppelt ist und an einem sechsten Drehpunkt (98) an den Hauptkörper gekoppelt ist, wobei der vierte Arm an einem siebten Drehpunkt (104) an das weitere Getriebe gekoppelt ist und an einem achten Drehpunkt (106) an den Hauptkörper gekoppelt ist, wobei der fünfte Drehpunkt um einen dritten Abstand (C) von dem siebten Drehpunkt beabstandet ist und der sechste Drehpunkt um einen vierten Abstand (D), der größer als der dritte Abstand ist, von dem achten Drehpunkt beabstandet ist.

## Revendications

1. Aspirateur robotisé (10) comprenant :
un corps principal (12) ;
une roue (28, 30) servant à permettre le déplacement du corps principal ;
un moteur d'entraînement (32, 34) servant à entraîner la roue,
une boîte de vitesses (36, 38) accouplant le moteur d'entraînement à la roue ;
un capteur de distance (26) situé sur le corps principal, le capteur de distance servant à détecter une distance entre le corps principal et une surface sur laquelle la roue est située ; et
un système de suspension (40, 42) accouplant la roue au corps principal ;
dans lequel le système de suspension comprend un premier bras (60) et un deuxième bras (62), le premier bras étant accouplé au niveau d'un premier point de pivotement (70) à la boîte de vitesses et accouplé au niveau d'un deuxième point de pivotement (74) au corps principal, le deuxième bras étant accouplé au niveau d'un troisième point de pivotement (80) à la boîte de vitesses et accouplé au niveau d'un quatrième point de pivotement (82) au corps principal, le premier point de pivotement étant espacé du troisième point de pivotement d'une première distance (A), et le deuxième point de pivotement étant espacé du quatrième point de pivotement d'une seconde distance (B) supérieure à la première distance.

2. Aspirateur robotisé selon la revendication 1, l'aspirateur robotisé (10) étant mobile dans une première direction sensiblement orthogonale à un axe de rotation de la roue (28, 30), et dans une seconde direction opposée sensiblement orthogonale à l'axe de rotation de la roue, les premier et troisième points de pivotement (70, 80) étant situés en arrière des deuxième et quatrième points de pivotement (74, 82) lorsque l'aspirateur robotisé se déplace dans la première direction, et les deuxième et quatrième points de pivotement étant situés en arrière des premier et troisième points de pivotement lorsque l'aspirateur robotisé se déplace dans la seconde direction.

3. Aspirateur robotisé selon la revendication 1 ou la revendication 2, dans lequel un rapport de la seconde distance (B) à la première distance (A) est dans la région de 1,1 à 3,0.

4. Aspirateur robotisé selon l'une quelconque des revendications précédentes, dans lequel un rapport de la seconde distance (B) à la première distance (A) est d'environ 1,5.

5. Aspirateur robotisé selon l'une quelconque des revendications précédentes, dans lequel la première distance (A) est dans la région de 10,0 mm à 16,0 mm.

6. Aspirateur robotisé selon l'une quelconque des revendications précédentes, dans lequel la première distance (A) est d'environ 14,3 mm.

7. Aspirateur robotisé selon l'une quelconque des revendications précédentes, dans lequel la seconde distance (B) est dans la région de 17,0 mm à 30,0 mm.

8. Aspirateur robotisé selon l'une quelconque des revendications précédentes, dans lequel la seconde distance (B) est d'environ 21,3 mm.

9. Aspirateur robotisé selon l'une quelconque des revendications précédentes, dans lequel le premier bras (60) comprend une première extrémité (66) au niveau de laquelle le premier point de pivotement (70) est situé, et une seconde extrémité (68) opposée à la première extrémité, dans lequel la seconde extrémité est accouplée à un ressort (64) au niveau d'un point d'accouplement (72), et le deuxième point de pivotement (74) est situé entre les première et seconde extrémités.

10. Aspirateur robotisé selon la revendication 9, dans lequel le premier bras (60) présente une forme non linéaire telle qu'un angle est défini entre le point d'accouplement (72) et le deuxième point de pivotement (74), et l'angle est dans la région de 90° à 120°, de préférence dans lequel l'angle est d'environ 96°.

11. Aspirateur robotisé selon la revendication 9 ou 10, dans lequel le ressort (64) présente une constante de rappel dans la région de 0,75 N/m à 1,25 N/m.

12. Aspirateur robotisé selon l'une quelconque des revendications 9 à 11, dans lequel le ressort (64) présente une constante de rappel d'environ 0,96 N/m.

13. Aspirateur robotisé selon l'une quelconque des revendications précédentes, dans lequel la roue (28, 30) comprend un moyeu (56), et le moteur d'entraînement (32, 34) est situé à l'intérieur du moyeu, de préférence dans lequel le moteur d'entraînement est décalé relativement à un axe de rotation de la roue.

14. Aspirateur robotisé selon la revendication 13, dans lequel la boîte de vitesses (36, 38) est située à l'intérieur du moyeu (56).

15. Aspirateur robotisé (10) selon l'une quelconque des revendications précédentes, dans lequel la roue (28, 30) est située d'un premier côté du corps principal, et l'aspirateur robotisé comprenant :
une autre roue (30, 28) située d'un second côté du corps principal (12) opposé au premier côté du corps principal ;
un autre moteur d'entraînement (34, 32) servant à entraîner l'autre roue ;
une autre boîte de vitesses (38, 36) accouplant l'autre moteur d'entraînement à l'autre roue ; et
un autre système de suspension (42, 40) accouplant l'autre roue au corps principal ;
dans lequel l'autre système de suspension comprend un troisième bras (84) et un quatrième bras (86), le troisième bras étant accouplé à l'autre boîte de vitesses au niveau d'un cinquième point de pivotement (94) et accouplé au corps principal au niveau d'un sixième point de pivotement (98), le quatrième bras étant accouplé à l'autre boîte de vitesses au niveau d'un septième point de pivotement (104) et accouplé au corps principal au niveau d'un huitième point de pivotement (106), le cinquième point de pivotement étant espacé du septième point de pivotement d'une troisième distance (C), et le sixième point de pivotement étant espacé du huitième point de pivotement d'une quatrième distance (D) supérieure à la troisième distance.
